Europäisches Patentamt

European Patent Office

Office européen des brevets

(11) Publication number: **0 155 074**
**B1**

(12) **EUROPEAN PATENT SPECIFICATION**

(45) Date of publication of patent specification: **11.07.90**

(51) Int. Cl.⁵: **H 04 M 19/00**

(21) Application number: **85300533.8**

(22) Date of filing: **25.01.85**

(54) Active impedance line feed circuit with improved ground fault protection.

(30) Priority: **12.03.84 CA 449393**

(43) Date of publication of application:
**18.09.85 Bulletin 85/38**

(45) Publication of the grant of the patent:
**11.07.90 Bulletin 90/28**

(84) Designated Contracting States:
**AT BE DE FR GB IT NL SE**

(56) References cited:
**EP-A-0 076 402**
**DE-A-2 653 888**
**DE-A-3 032 970**
**GB-A-2 087 199**

(73) Proprietor: **NORTHERN TELECOM LIMITED**
**1600 Dorchester Boulevard West**
**Montreal Quebec H3H 1R1 (CA)**

(72) Inventor: **Rosenbaum, Stanley Daniel**
**2074 Woodcrest Road**
**Ottawa Ontario K1H 6H3 (CA)**
Inventor: **Plett, Calvin**
**1171 Wellington Street Apt. No. 124**
**Ottawa Ontario K1Y 2Z2 (CA)**

(74) Representative: **Crawford, Andrew Birkby et al**
**A.A. THORNTON & CO. Northumberland House**
**303-306 High Holborn**
**London WC1V 7LE (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is in the field of line circuits for telephone systems and more particularly concerns active impedance line feed circuits as for example disclosed in any of copending patent application serial Nos. CA-A-404,502 filed 4 June, 1982 entitled "Active Impedance Line Feed Circuit"; Serial No. CA-A-404,561 filed 7 June, 1982 entitled "Active Impedance Transformer Assisted Line Feed Circuit"; and Serial No. CA-A-434,913 filed 18 August, 1983 entitled "Active Impedance Transformer Assisted Line Feed Circuit with Supervision Filtering".

A typical active impedance line feed circuit includes tip and ring amplifier circuits being controlled to exhibit predetermined a.c. impedance and d.c. resistance characteristics for the purpose of supplying energizing current for a two wire communication line. These characteristics are determined by respective a.c. and d.c. feedback networks in association with an amplifier in the line feed circuit. One problem associated especially with an integrated circuit realization of an active impedance line circuit is that of heat dissipation. This problem can be extreme, particularly in an equipment shelf or housing containing a densely packaged group or groups of the active impedance line feed circuits. In one example of the line feed circuit in application Serial No. CA-A-404,502 filed 4 June, 1982 a diode is combined with the d.c. feedback network to limit feed current in the case of a short and hence low resistance communication line. As the line feed current is thus limited in some of the line feed circuits in a typical group of the line feed circuits, the overall heat dissipation problem is likewise advantageously reduced. However, an occasional occurrence of a ground fault on the communication line may well cause individual heat induced circuit failure and in an extreme case failure of immediately adjacent circuits.

The potential severity of this problem is illustrated in the case of a low resistive fault connection from the ring terminal of an active impedance line circuit to ground, the communication line being otherwise open circuited, i.e. ON HOOK. In this case, current flows only in the ring feed resistor and the ring amplifier circuit of the line feed circuit. In this case, current limiting in the ring amplifier will occur only at about twice the level of normal loop current. Furthermore resultant heat generation is disadvantageously concentrated in one small area, that is at the ring amplifier circuit portion of the line feed circuit.

An active impedance line feed circuit for supplying direct energizing current from tip and ring amplifiers via tip and ring terminals to a two wire communication line, includes in accordance with the invention, a resistive signal path for carrying control signals to an input of the ring amplifier, a d.c. amplifier having an output and an input resistively connected to the tip and ring terminals, and a unidirectional resistive signal path being connected from the input of the ring amplifier to the output of the d.c. amplifier. In an instant of a ground fault occurring in the communication line, the output of the d.c. amplifier causes the input at the ring amplifier to be modified such that a reduced amount of energizing current is conducted.

In one example of the invention, the output of the d.c. amplifier is resistively connected to each of tip and ring voltage taps at which voltage indication of tip and ring currents are provided. In this example common mode rejection characteristics of the control circuit are considerably relaxed while continuing to meet the common mode rejection operating requirements of typical telephone line interface circuits.

In another example the output of the d.c. amplifier is connected by respective resistors to the inverting input of the d.c. amplifier and to the tip and ring voltage taps. A bidirectional conductive circuit, for example a pair of diodes arranged in back-to-back parallel configuration, is connected between the junction of the three respective resistors and the junction of the output of the d.c. amplifier and the unidirectional resistive signal path.

Brief Description of the Drawings

An example embodiment of an active impedance line feed circuit with ground fault protection is described with reference to the accompanying drawings in which:

Figure 1 is a schematic diagram of an active impedance line feed circuit in accordance with the invention.

Figure 2 is a graphical illustration of various example operating characteristics in the presence of a ground fault, for which the circuit in figure 1 can be designed; and

Figure 3 is a schematic diagram illustrating an alternative embodiment of part of the active impedance line feed circuit in figure 1.

Description of the Example Embodiment

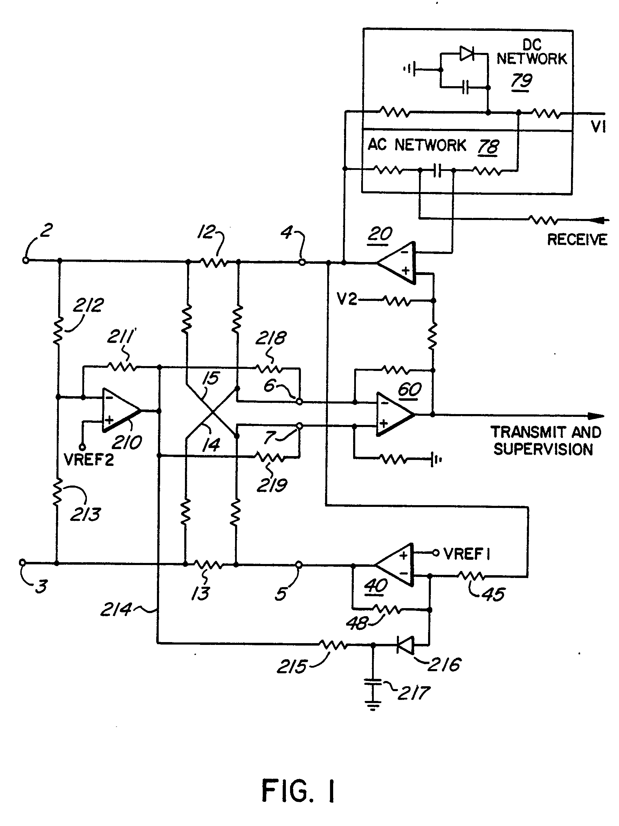

Many aspects of the active impedance line feed circuit in figure 1 are similar to examples of line feed circuits described in the previously mentioned patent applications. Therefore many of the circuit elements are labelled similarly. However circuit elements not of the same function or not introduced in any of the previous patent applications are labelled distinctly therefrom.

Referring to figure 1, a tip feed resistor 12 is connected in series with a tip terminal 2 and an output terminal 4 of a tip amplifier circuit 20. A ring feed resistor 13, of ohmic value similar to that of the tip feed resistor 12, is connected in series with a ring terminal 3 and an output terminal 5 of a ring amplifier circuit 40. The tip and ring amplifier circuits 20 and 40 are typically powered from a battery in a telephone system, not shown, common to a plurality of line circuits. A tip voltage divider 14 defines a tip voltage tap 6 and is connected in series between the terminals 4 and 3. A ring voltage divider 15 defines a ring voltage tap 7 and is connected in series between the terminals 2 and 5. A control circuit 60 includes a differential input connected across the voltage taps 6 and 7 as shown. An output of the control circuit 60 is connected to a transmit and supervision lead for providing a.c. information signals and supervisory signals to the associated telephone system. The output of the control circuit 60 is also resistively connected to a non-inverting input of the tip amplifier circuit 20, as is a bias voltage source V2.

Resistors 45 and 48 are connected in series between the outputs of the tip and ring amplifier circuits 20 and 40, and a junction of the resistors 45 and 48 is connected to an inverting input of the ring amplifier circuit 40. It is preferable to have similar ohmic values for the resistors 45 and 48 to be similar so that the ring amplifier circuit 40 will operate as an inverse follower with a gain of one with respect to signals at the terminal 4. Operating a.c. impedance and d.c. resistance characteristics of the outputs of the tip and ring amplifier circuits are therefore similar and are determined primarily by a.c. and d.c. networks 78 and 79 connected as shown between the output and the inverting input of the tip amplifier circuit 20.

Circuit elements identified with labels in a range of 210—219 in combination with the active impedance line feed circuit as thus far described, provide for improved ground fault protection and common mode rejection.

In more detail, a differential amplifier circuit, hereafter referred to as a d.c. amplifier 210 includes an output being resistively coupled via resistors 218 and 219 to the tip and ring voltage taps 6 and 7 respectively. The output is also connected to the inverting input of the ring amplifier circuit 40 via a unidirectional resistance signal path 214 which includes a diode 216 connected in series with a resistor 215 as shown. In this example a capacitor 217 is connected between ground and a junction of the resistor 215 and the diode 216. An inverting input of the amplifier 210 is connected to the output of the amplifier 210 by a resistor 211, and is also connected to the tip and ring terminals 2 and 3 by resistors 212 and 213 respectively.

In operation, an output signal from the amplifier 210 is the inverse of common mode signals appearing at the tip and ring terminals 2 and 3. The amplifier 210 is substantially non-responsive to differential signals, such as normally occur in transitions between ON HOOK and OFF HOOK as well as for normal voice signals because the values of the resistors 212 and 213 are chosen to be closely similar. The output of the amplifier 210 is coupled via the resistors 218 and 219, which are also chosen to be closely similar, to the tip and ring voltage taps 6 and 7, such that common mode signals normally appearing at the tip and ring voltage taps 6 and 7 via the tip and ring voltage dividers 14 and 15, are substantially eliminated. This is a benefit in that the common mode rejection characteristics of the control circuit 60 are conveniently relaxed while at least maintaining a required overall common mode immunity characteristic of the active impedance line circuit.

In the case of a ground fault, the input of the amplifier 210 tends to rise toward ground which in turn causes the output signal from the amplifier 210 to become more negative to restrain the input voltage, via the resistor 211, to a potential of VREF2. If the output signal becomes sufficiently negative, the signal path 214 becomes conductive via the diode 216. With a further decrease in ground fault resistance, the signal from the output of the amplifier 210 is coupled to the inverting input of the ring amplifier circuit 40. This causes the output voltage at the terminal 5 to be less negative which reduces the flow of ground fault current.

A threshold of ground fault current limiting corresponds to a threshold of conduction of the diode 216. One means of adjusting the threshold of conduction of the diode 216 is by choosing appropriate potentials for VREF1 and VREF2. However it is important for maintaining longitudinal balance that the diode 216 does not come into conduction during normal loop operation. This is a serious limitation, as longitudinal interference causes input signals to be applied to the amplifier 210 from both tip and ring terminals 3 and 4, whereas a severe ground fault causes input from substantially only the ring terminal 3. Therefore in the active impedance line circuit in figure 1, the threshold of ground fault current at which the diode 216 begins to conduct must be set at a level which is twice the permissible peak longitudinal current at either of the tip and ring terminals 2 or 3. Since a typical longitudinal current tolerance of up to 30 milliamperes of peak alternating current may be required of the active impedance line feed circuit, there still may be a significant heat dissipation problem during a ground fault condition.

This heat dissipation problem can be overcome in the example embodiment by at least two solutions, briefly, a limited choice of values of the resistor 215 or the addition of the capacitor 217 as shown in figure 1 or both.

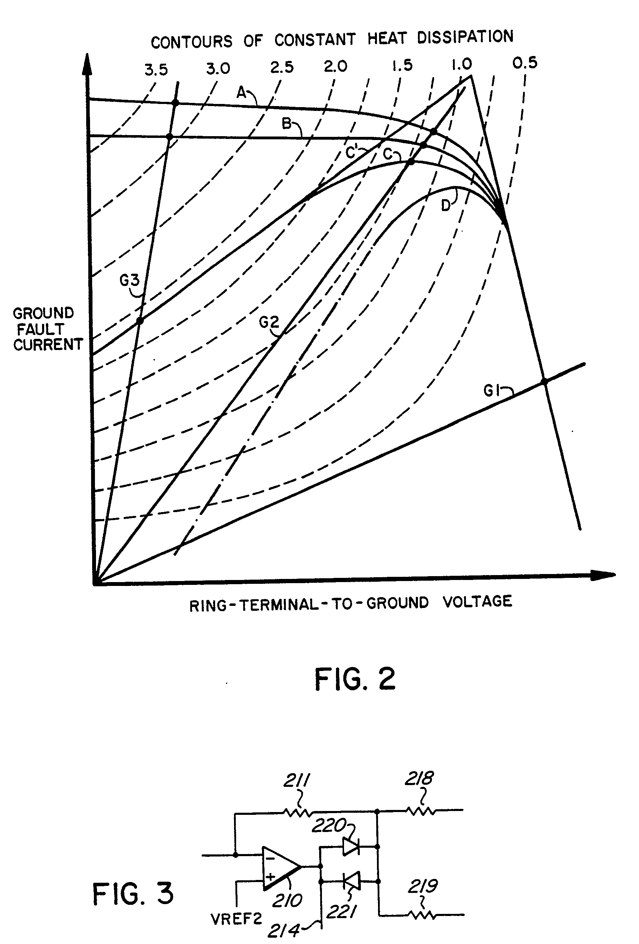

The first solution involves the value of the resistor 215 being less than that required for holding ground fault current constant at the threshold level. The lesser value of the resistor 215 in operation results in a fold down or crowbar characteristic, which is illustrated in the graph in figure 2. In figure 2 a vertical axis represents ground fault current and a horizontal axis represents voltage as would be measured between the ring terminal 3 and ground. Various values of the resistor 215 correspond to operating characteristic curves A, B, C and D. Various ground fault resistances, with a communication line being connected at the tip and ring terminals 2 and 3 and being in an ON HOOK state, are represented by load lines G1, G2, and G3. Intersections of the lines G1—G3 with the curves A—D illustrate actual operating conditions. Heat dissipation in the tip amplifier circuit 40 and the ring feed resistor 13 is calculated as the product of the ground fault current with the voltage drop between the negative battery supply voltage and the ring terminal 3. Dotted line curves in figure 2 are plotted in accordance with these calculations and represent contours of levels of heat generations between 3.5 and 0.5 watts. If the value of the resistor 215 is chosen to obtain a ground fault current similar to line C, it is seen that as the ground fault resistance decreases the ground fault current firstly increases toward the threshold of conduction of the diode 216, then reaches a maximum and thereafter decreases. The maximum curring dissipation of heat is indicated by the highest wattage contour level reached. In this respect curve C is preferable to curve B. Curve B has a similar fault current threshold, and therefore a similar longitudinal interference signal tolerance, but results in a greater heat dissipation than curve C. Curve C is also probably preferable to curve D. It may be unacceptable to assign such value to the resistor 215 so as to obtain operating characteristics similar to curve D. This curve intersects with some load lines at more than one point. Part of curve D is represented by a broken line which corresponds to an unstable region of operation, wherein d.c. latch-up is likely. If a latch-up occurs and normal conditions are later restored, the line circuit will not return to normal operation unless some positive action is taken, such as removal and restoration of the battery supply.

The second solution for improving upon the heat dissipation problem is to connect the capacitor 217 between ground and the junction of the resistor 215 and the diode 216. The value of the capacitor 217 should be large enough to provide in combination with the resistor 215 a low pass filter so as to prevent longitudinal signals at local AC power distribution frequency from influencing conduction in the diode 216. In this case the ground fault current threshold can be set as low as is required without regard for longitudinal signal interference.

Another embodiment of the invention, as shown in figure 3, includes diodes 220 and 221 being connected in parallel back-to-back configuration between the output of the amplifier 210 and the junction of the resistors 211, 218 and 219. In this embodiment it is preferred that the potentials of VREF1 and VREF2 are about the same, and further that these potentials are similar to an average of voltages which would appear at the voltage taps 6 and 7 during operation at about a predetermined threshold of ground fault current. In contrast to the circuit in figure 1, where the amplifier 210 is operated with a fairly high gain to provide a stable ground fault protection threshold and significant improved common mode signal reduction at the voltage taps 6 and 7, the circuit of figure 3 provides for sharp and stable definition of the ground fault condition in the presence of a much lower value of the resistor 211. The lower value of the resistor 211 extends the linear range of the amplifier 210 so that it remains in a substantially linear operating condition even in the extreme case of ringing signals applied to the associated telephone line. The resistors 215, 218 and 219 are also proportionately lower in ohmic value.

In the normal state of operation the average of the voltages at the tip and ring terminals 2 and 3 is more negative than the potential of VREF1 and VREF2. Thus the output of the d.c. amplifier 210 is more positive than the VREF potential and therefore the diode 220 is conductive and the diodes 216 and 221 are non-conductive.

In a transition to ground fault state the average of the voltages of tip and ring terminals 2 and 3 become more positive than the VREF potential, causing the diode 220 to become non-conductive. Momentarily the diode 221 remains in the non-conductive state, thereby permitting the amplifier 210 to tend toward open loop gain in the absence of feedback normally supplied via the resistor 211. The output of the d.c. amplifier 210 rapidly swings sufficiently negative to cause the diode 221 to become conductive, which also causes the diode 216, in the path 214 to become conductive. This restrains the conduction of the tip amplifier circuit 40.

The ground fault protection operating characteristics of the circuit embodiment in figure 3 are an improvement in contrast with the operating characteristics of the circuit embodiment in figure 1. Firstly, linear operation of the d.c. amplifier 210 is extended by a proportionate lowering of the values of the resistors 211, 215, 218 and 219. Secondly, the arrangement of the additional diodes 220 and 221 provides a much sharper threshold definition of transition between normal and ground fault conditions of operation. This is exemplified by a curve C' in figure 2. Thirdly, when it is arranged that the diodes 216 and 221 are of similar structure and electrical characteristics, the threshold of transition is more stable, being substantially independent of temperature variations during circuit operation.

## Claims

1. An active impedance line feed circuit for supplying direct energizing current for a two wire communication line from tip and ring amplifiers (20, 40) via tip and ring terminals (2, 3) in response to a control signal from a control circuit (60) having a differential input connected across tip and ring voltage taps (6, 7) for providing signals corresponding to currents in tip and ring feed resistors (12, 13), the active impedance line feed circuit being characterized by:

a d.c. amplifier (210) having an output and having an input resistively connected to the tip and ring terminals; and

a unidirectional signal path (214) being connected between an input of the ring amplifier and the output of the d.c. amplifier;

whereby in an instance of a ground fault or the like occurring along a wire of the communication line, current flow via the ring amplifier is restrained.

2. An active impedance line feed circuit as defined in claim 1 wherein the input of the ring amplifier is an inverting input and is resistively coupled to the unidirectional signal path and resistively coupled to an output of the tip amplifier.

3. An active impedance line feed circuit as defined in claim 2 wherein the unidirectional signal path comprises a diode (216) arranged in current aiding configuration in the direction of the output of the d.c. amplifier.

4. An active impedance line feed circuit as defined in claim 1 wherein the unidirectional signal path is characterized by a unidirectional current conducting device (216) being connected in series with an input of the ring amplifier, and a resistor (215) being connected in series between the output of the d.c. amplifier and the unidirectional current conducting device.

5. An active impedance line feed circuit as defined in claim 4 in which the unidirectional signal path includes an a.c. grounding device (217) at a junction of the unidirectional conductive device and the resistor.

6. An active impedance line feed circuit comprising: tip and ring amplifiers (20, 40) being responsive to a control signal being proportional to currents in tip and ring feed resistors (12, 13) for supplying direct energizing current and a.c. information signals to a two wire communication line via tip and ring terminals (2, 3) being connected to outputs of the tip and ring amplifier by the tip and ring feed resistors respectively, a control circuit (60) for generating the control signal and having a differential input connected across the tip and ring voltage taps, the active impedance line feed circuit being characterised by:

tip and ring voltage dividers (14, 15) defining tip and ring voltage taps (6, 7) respectively, a d.c. amplifier (210) having an inverting input resistively connected to the tip and ring terminals and an output resistively connected to the tip and ring voltage taps, whereby in operation signals at the tip and ring voltage taps which result from common mode current flow in the tip and ring feed resistors are reduced by an inverse signal from the output of the d.c. amplifier.

7. An active impedance line feed circuit as defined in claim 6 further comprising a unidirectional signal path (214) being connected between an input of the ring amplifier and the output of the d.c. amplifier, whereby in an instance of a ground fault or the like occurring along a wire of the communication line, current flow via the ring amplifier is restrained.

8. An active impedance line feed circuit as defined in claim 7 wherein the unidirectional signal path comprises a unidirectional current conductive device (216) being connected in series with the input of the ring amplifier and a resistor (215) being connected in series between the output of the d.c. amplifier and the unidirectional current conductive device.

9. An active impedance line feed circuit as defined in claim 8 in which the unidirectional signal path further comprises a capacitor (217) being connected between ground and a junction of the unidirectional current conductive device and the resistor, the capacitor being for providing an impedance path to ground for a.c. signals, the capacitor being of such value that a conductance of the impedance path is greater than that of the resistor for signals of a frequency corresponding to that of typical AC power distribution.

10. An active impedance line feed circuit as defined in claim 6 wherein first and second resistors (218, 219) are connected between the output of the d.c. amplifier and the tip and ring voltage taps respectively, and a third resistor (211) is connected between the output and the inverting input of the d.c. amplifier, the active impedance line feed circuit further comprising:

bidirectional conductive means (220, 221) for conducting current in response to at least a predetermined voltage and otherwise being substantially non-conductive, the bidirectional conductive means being connected in series between the output of the d.c. amplifier and the junction of the first, second and third resistors; and

a unidirectional signal path (214) being connected between an input of the ring amplifier and the junction of the bidirectional conductive means and the output of the d.c. amplifier;

whereby in an instance of a ground fault or the like occurring along a wire of the communication line, current flow via the ring amplifier is restrained.

11. An active impedance line feed circuit as defined in claim 7 wherein each of the tip, ring and d.c. amplifiers have inverting and non-inverting inputs, the output of the tip amplifier being resistively connected to the inverting input of the ring amplifier, the non inverting inputs of the tip amplifier and the d.c. amplifier each being connected in common to a voltage source (VREF) of predetermined potential, the output of the d.c. amplifier being connected by respective resistances (211, 218, 219) to the inverting input of the d.c. amplifier and to the tip and ring voltage taps, and wherein the unidirectional signal path includes a first diode (216) connected in series therewith, and the active impedance line feed circuit further comprising:

second and third diodes (220, 221) being connected in back-to-back parallel configuration between the junction of said respective resistances and the junction of the output of the d.c. amplifier and the unidirectional signal path.

12. An active impedance line feed circuit as defined in claim 8, wherein each of the tip, ring and d.c. amplifiers have inverting and non-inverting inputs, the output of the tip amplifier being resistively connected to the inverting input of the ring amplifier, the non inverting inputs of the tip amplifier and d.c. amplifier each being connected in common to a voltage source (VREF) of predetermined potential, the output of the d.c. amplifier being connected by respective resistances (211, 218, 219) to the inverting input of the d.c.

amplifier and to the tip and ring voltage taps, and wherein the unidirectional signal path includes a first diode (216) connected in series therewith, and the active impedance line feed circuit further comprising:

second and third diodes (220, 221) being connected in back-to-back parallel configuration between the junction of said respective resistances and the junction of the output of the d.c. amplifier and the unidirectional signal path.

13. An active impedance line feed circuit as defined in claim 9, wherein each of the tip, ring and d.c. amplifiers have inverting and non-inverting inputs, the output of the tip amplifier being resistively connected to the inverting input of the ring amplifier, the non inverting inputs of the tip amplifier and d.c. amplifier each being connected in common to a voltage source (VREF) of predetermined potential, the output of the d.c. amplifier being connected by respective resistances (211, 218, 219) to the inverting input of the d.c. amplifier and to the tip and ring voltage taps, and wherein the unidirectional signal path includes a first diode (216) connected in series therewith, and the active impedance line feed circuit further comprising:

second and third diodes (220, 221) being connected in back-to-back parallel configuration between the junction of said respective resistances and the junction of the output of the d.c. amplifier and the unidirectional signal path.

14. An active impedance line feed circuit as defined in claim 7, wherein each of the tip, ring and d.c. amplifiers have inverting and non-inverting inputs, the output of the tip amplifier being resistively connected to the inverting input of the ring amplifier, the non inverting inputs of the tip amplifier and the d.c. amplifier each being connected in common to a voltage source (VREF) of predetermined potential, the output of the d.c. amplifier being connected by respective resistances (211, 218, 219) to the inverting input of the d.c. amplifier and to the tip and ring voltage taps, and wherein the unidirectional signal path includes a first diode (216) connected in series therewith, the active impedance line feed circuit further comprising:

second and third diodes (220, 221) being connected in back-to-back parallel configuration between the junction of said respective resistances and the junction of the output of the d.c. amplifier and the unidirectional signal path, the first, and at least one of the second and third diodes being of similar structure.

15. An active impedance line feed circuit as defined in claim 8, wherein each of the tip, ring and d.c. amplifiers have inverting and non-inverting inputs, the output of the tip amplifier being resistively connected to the inverting input of the ring amplifier, the non inverting inputs of the tip amplifier and the d.c. amplifier each being connected in common to a voltage source (VREF) of predetermined potential, the output of the d.c. amplifier being connected by respective resistances (211, 218, 219) to the inverting input of the d.c. amplifier and to the tip and ring voltage taps, and wherein the unidirectional signal path includes a first diode (216) connected in series therewith, the active impedance line feed circuit further comprising:

second and third diodes (220, 221) being connected in back-to-back parallel configuration between the junction of said respective resistances and the junction of the output of the d.c. amplifier and the unidirectional signal path, the first, and at least one of the second and third diodes being of similar structure.

16. An active impedance line feed circuit as defined in claim 9, wherein each of the tip, ring and d.c. amplifiers have inverting and non-inverting inputs, the output of the tip amplifier being resistively connected to the inverting input of the ring amplifier, the non inverting inputs of the tip amplifier and the d.c. amplifier each being connected in common to a voltage source (VREF) of predetermined potential, the output of the d.c. amplifier being connected by respective resistances (211, 218, 219) to the inverting input of the d.c. amplifier and to the tip and ring voltage taps, and wherein the unidirectional signal path includes a first diode (216) connected in series therewith, the active impedance line feed circuit further comprising:

second and third diodes (220, 221) being connected in back-to-back parallel configuration between the junction of said respective resistances and the junction of the output of the d.c. amplifier and the unidirectional signal path, and at least one of the second and third diodes being of similar structure.

**Patentansprüche**

1. Leitungsspeiseschaltung aktiver Impedanz zum Zuführen von Beaufschlagungsgleichstrom zu einer Zweidraht-Nachrichtenleitung von Spitzen- und Ringverstärkern (20, 40) über Spitzen- und Ringklemmen (2, 3) in Abhängigkeit von einem Steuersignal von einer Steuerschaltung (60) mit einem Differentialeingang, der über Spitzen- und Ring-Spannungsabgriffe (6, 7) angeschlossen ist, um Signale entsprechend Strömen in Spitzen- und Ringspeisewiderständen (12, 13) zu schaffen, wobei die Leitungsspeiseschaltung aktiver Impedanz gekennzeichnet ist durch:

einen Gleichstromverstärker (210) mit einem Ausgang und einem über Widerstände an die Spitzen- und Ringklemmen angeschlossenen Eingang; und

einen unidirektionalen Signalweg (214), der zwischen einem Eingang des Ringverstärkers und dem Ausgang des Gleichstromverstärkers angeschlossen ist;

wodurch beim Auftreten eines Erdfehlers oder dergleichen längs eines Drahtes der Nachrichtenleitung der Stromfluß über den Ringverstärker beschränkt wird.

2. Leitungsspeiseschaltung aktiver Impedanz nach Anspruch 1, bei der der Eingang des Ringverstärkers ein invertierender Eingang ist und über Widerstände mit dem unidirektionalen Signalweg gekoppelt und über Widerstände mit einem Ausgang des Spitzenverstärkers gekoppelt ist.

3. Leitungsspeiseschaltung aktiver Impedanz nach Anspruch 2, bei der der unidirektionale Signalweg eine in Stromhilfskonfiguration in Richtung zum Ausgang des Gleichstromverstärkers angeordnete Diode (216) umfaßt.

4. Leitungsspeiseschaltung aktiver Impedanz nach Anspruch 1, bei der der unidirektionale Signalweg gekennzeichnet ist durch ein unidirektional stromleitendes Bauelement (216), das in Reihe mit einem Eingang des Ringverstärkers angeschlossen ist, und durch einen in Reihe zwischen dem Ausgang des Gleichstromverstärkers und dem unidirektional stromleitenden Bauelement angeschlossenen Widerstand (215).

5. Leitungsspeiseschaltung aktiver Impedanz nach Anspruch 4, bei der der unidirektionale Signalweg ein Wechselspannungs-Erdungselement (217) an einer Verbindungsstelle des unidirektional leitenden Bauelements mit dem Widerstand enthält.

6. Leitungsspeiseschaltung aktiver Impedanz mit: Spitzenund Ringverstärkern (20, 40), die in Abhängigkeit von einem zu Strömen in Spitzen- und Ringspeisewiderständen (12, 13) proportionalen Steuersignal für Zuführung von Beaufschlagungsgleichstrom sorgen und von Wechselstrom-Informationssignalen zu einer Zweidraht-Nachrichtenleitung über Spitzen- und Ringklemmen (2, 3), die an Ausgängen der Spitzenund Ringverstärker über jeweilige Spitzen- bzw. Ringspeisewiderstände angeschlossen sind, mit einer Steuerschaltung (60) zur Erzeugung des Steuersignals, mit einem über den Spitzen- und Ringspannungsabgriff angeschlossenen Differentialeingang, wobei die Leitungsspeiseschaltung aktiver Impedanz gekennzeichnet ist durch: Spitzen- und Ringspannungsteiler (14, 15), welche Spitzen- bzw. Ring-Spannungsabgriffe (6, 7) definieren, einen Gleichstromverstärker (210) mit einem an den Spitzen- und Ringklemmen über Widerstände angeschlossenen invertierenden Eingang und einem über Widerstände an den Spitzen- und Ringspannungsabgriffen angeschlossenen Ausgang, wodurch im Betrieb Signale an den Spitzen- und Ringspannungsabgriffen, die von Gleichtakt-Stromfluß in den Spitzen- und Ringspeisewiderständen herrühren, durch ein inverses Signal vom Ausgang des Gleichstromverstärkers reduziert werden.

7. Leitungsspeiseschaltung aktiver Impedanz nach Anspruch 6, weiter mit einem unidirektionalen Signalweg (214), der zwischen einem Eingang des Ringverstärkers und dem Ausgang des Gleichstromverstärkers angeschlossen ist, wodurch beim Auftreten eines Erdfehlers oder dergleichen längs eines Drahtes der Nachrichtenleitung Stromfluß über den Ringverstärker beschränkt wird.

8. Leitungsspeiseschaltung aktiver Impedanz nach Anspruch 7, bei der der unidirektionale Signalweg ein in Reihe mit dem Eingang des Ringverstärkers angeschlossenes unidirektionales Stromleitelement (216) und einen in Reihe zwischen dem Ausgang des Gleichstromverstärkers und dem unidirektionalen Stromleitelement angeschlossenen Widerstand (215) umfaßt.

9. Leitungsspeiseschaltung aktiver Impedanz nach Anspruch 8, bei der der unidirektionale Signalweg weiter einen zwischen Erde und einer Verbindungsstelle des unidirektionalen Stromleitelementes mit dem Widerstand angeschlossenen Kondensator (217) umfaßt, wobei der Kondensator zur Schaffung eines Impedanzweges für Wechselstromsignale zu Erde sorgt und einen solchen Wert hat, daß der Leitwert des Impedanzweges größer als der des Widerstandes ist für Signale einer Frequenz, die der typischen Wechselspannungs-Netzleistungsfrequenz entspricht.

10. Leitungsspeiseschaltung aktiver Impedanz nach Anspruch 6, bei der erste und zweite Widerstände (218, 219) zwischen dem Ausgang des Gleichstromverstärkers und den Spitzen- bzw. Ring-Spannungsabgriffen angeschlossen sind und ein dritter Widerstand (211) zwischen dem Ausgang und dem invertierenden Eingang des Gleichstromverstärkers angeschlossen ist, wobei die Leitungsspeiseschaltung aktiver Impedanz weiter umfaßt:

bidirektional leitendes Mittel (220, 221) zur Stromleitung in Abhängigkeit von mindestens einer vorbestimmten Spannung, während es sonst im wesentlichen nichtleitend ist, wobei das bidirektional leitende Mittel in Reihe zwischen dem Ausgang des Gleichstromverstärkers und der Verbindungsstelle des ersten, zweiten und dritten Widerstandes angeschlossen ist; und

einen unidirektionalen Signalweg (214), der zwischen einem Eingang des Ringverstärkers und der Verbindungsstelle des bidirektional leitenden Mittels mit dem Ausgang des Gleichstromverstärkers angeschlossen ist; wodurch beim Auftreten eines Erdfehlers oder dergleichen längs eines Drahtes der Nachrichtenverbindungsleitung Stromfluß über den Ringverstärker beschränkt wird.

11. Leitungsspeiseschaltung aktiver Impedanz nach Anspruch 7, bei der jeder Spitzen-, Ring- und Gleichstrom-Verstärker invertierende und nichtinvertierende Eingänge hat, der Ausgang des Spitzenverstärkers über Widerstände mit dem invertierenden Eingang des Ringverstärkers verbunden ist, die nichtinvertierenden Eingänge des Spitzenverstärkers und des Gleichstromverstärkers jeweils gemeinsam mit einer Spannungsquelle (VREF) mit vorbestimmtem Potential verbunden sind, der Ausgang des Gleichstromverstärkers über jeweilige Widerstände (211, 218, 219) mit dem invertierenden Eingang des Gleichstromverstärkers und den Spitzen- und Ring-Spannungsabgriffen verbunden ist, bei der der unidirektionale Signalweg eine erste in Reihe damit angeschlossene Diode (216) umfaßt und die Leitungsspeiseschaltung aktiver Impedanz weiter enthält:

zweite und dritte Dioden (220, 221), die antiparallel zwischen der Verbindungsstelle der jeweiligen Widerstände und der Verbindungsstelle des Ausgangs des Gleichstromverstärkers mit dem unidirektionalen Signalweg angeschlossen sind.

12. Leitungsspeiseschaltung aktiver Impedanz nach Anspruch 8, bei der jeder Spitzen-, Ring- und Gleichstromverstärker invertierende und nichtinvertierende Eingänge hat, der Ausgang des Spitzenverstärkers über Widerstände mit dem invertierenden Eingang des Ringverstärkers verbunden ist, die nichtinvertierenden Eingänge des Spitzenverstärkers und des Gleichstromverstärkers jeweils gemeinsam mit einer Spannungsquelle (VREF) vorbestimmten Potentials verbunden sind, der Ausgang des Gleichstromverstärkers durch jeweilige Widerstände (211, 218, 219) mit dem invertierenden Eingang des Gleichstromverstärkers und den Spitzen- und Ring-Spannungsabgriffen verbunden ist, und wobei der unidirektionale Signalweg eine erste in Reihe damit angeschlossene Diode (216) enthält und die Leitungsspeiseschaltung aktiver Impedanz weiter umfaßt:

zweite und dritte Dioden (220, 221), die antiparallel zwischen der Verbindungsstelle der jeweiligen Widerstände und der Verbindungsstelle des Ausganges des Gleichstromverstärkers mit dem unidirektionalen Signalweg angeschlossen sind.

13. Leitungsspeiseschaltung aktiver Impedanz nach Anspruch 9, bei der jeder Spitzen-, Ring- und Gleichstromverstärker invertierende und nichtinvertierende Eingänge hat, der Ausgang des Spitzenverstärkers über Widerstände mit dem invertierenden Eingang des Ringverstärkers verbunden ist, die nichtinvertierenden Eingänge des Spitzenverstärkers und des Gleichstromverstärkers jeweils gemeinsam mit einer Spannungsquelle (VREF) vorbestimmten potentials verbunden sind, der Ausgang des Gleichstromverstärkers über jeweilige Widerstände (211, 218, 219) mit dem invertierenden Eingang des Gleichstromverstärkers und den Spitzen- und Ringspannungsabgriffen verbunden ist, bei der der unidirektionale Signalweg eine erste in Reihe damit angeschlossene Diode (216) enthält, und die Leitungsspeiseschaltung aktiver Impedanz weiter umfaßt:

zweite und dritte Dioden (220, 221), die antiparallel zwischen der Verbindungsstelle der jeweiligen Widerstände und der Verbindung des Ausgangs des Gleichstromverstärkers mit dem unidirektionalen Signalweg angeschlossen sind.

14. Leitungsspeiseschaltung aktiver Impedanz nach Anspruch 7, bei der jeder Spitzen-, Ring- und Gleichstromverstärker invertierende und nichtinvertierende Eingänge besitzt, der Ausgang des Spitzenverstärkers über Widerstände mit dem invertierenden Eingang des Ringverstärkers verbunden ist, die nichtinvertierenden Eingänge des Spitzenverstärkers und des Gleichstromverstärkers jeweils gemeinsam mit einer Spannungsquelle (VREF) von vorbestimmtem Potential verbunden sind, der Ausgang des Gleichstromverstärkers über jeweilige Widerstände (211, 218, 219) mit dem invertierenden Eingang des Gleichstromverstärkers und den Spitzen- und Ring-Spannungsabgriffen verbunden ist, und bei der der unidirektionalke Signalweg eine erste in Reihe damit angeschlossene Diode (216) enthält, wobei die Leitungsspeiseschaltung aktiver Impedanz weiter umfaßt:

zweite und dritte Dioden (220, 221), die antiparallel zwischen der Verbindungsstelle der jeweiligen Widerstände und der Verbindungsstelle des Ausgangs des Gleichstromverstärkers mit dem unidirektionalen Signalweg angeschlossen sind, wobei die erste und mindestens eine von den zweiten und dritten Dioden von gleichartigem Aufbau sind.

15. Leitungsspeiseschaltung aktiver Impedanz nach Anspruch 8, bei der jeder Spitzen-, Ring- und Gleichstromverstärker invertierende und nichtinvertierende Eingänge besitzt, der Ausgang des Spitzenverstärkers über Widerstände mit dem invertierenden Eingang des Ringverstärkers verbunden ist, die nichtinvertierenden Eingänge des Spitzenverstärkers und des Gleichstromverstärkers jeweils gemeinsam mit einer Spannungsquelle (VREF) vorbestimmten Potentials verbunden sind, der Ausgang des Gleichstromverstärkers durch jeweilige Widerstände (211, 218, 219) mit dem invertierenden Eingang des Gleichstromverstärkers und den Spitzen- und Ringspannungsabgriffen verbunden sind, und bei der der unidirektionale Signalweg eine erste in Reihe damit angeschlossene Diode (216) enthält, wobei die Leitungsspeiseschaltung aktiver Impedanz weiter umfaßt:

zweite und dritte Dioden (220, 211), die antiparallel zwischen der Verbindungsstelle der jeweiligen Widerstände und der Verbindung des Ausgangs des Gleichstromverstärkers mit dem unidirektionalen Signalweg angeschlossen sind, wobei die erste und mindestens eine von den zweiten und dritten Dioden von gleichartigem Aufbau sind.

16. Leitungsspeiseschaltung aktiver Impedanz nach Anspruch 9, bei der jeder Spitzen-, Ring- und Gleichstromverstärker invertierende und nichtinvertierende Eingänge besitzt, der Ausgang des Spitzenverstärkers über Widerstände mit dem invertierenden Eingang des Ringverstärkers verbunden ist, die nichtinvertierenden Eingänge des Spitzenverstärkers ud des Gleichstromverstärkers jeweils gemeinsam mit einer Spannungsquelle (VREF) vorbestimmten Potentials verbunden sind, der Ausgang des Gleichstromverstärkers über jeweilige Widerstände (211, 218, 219) mit dem invertierenden Eingang des Gleichstromverstärkers und den Spitzen- und Ringspannungsabgriffen verbunden ist, und bei der der unidirektionale Signalweg eine erste damit in Reihe verbundene Diode (216) enthält, wobei die Leitungsspeiseschaltung aktiver Impedanz weiter umfaßt:

zweite und dritte Dioden (220, 221), die antiparallel zwischen der Verbindungsstelle der jeweiligen Widerstände und der Verbindungsstelle des Ausgangs des Gleichstromverstärkers mit dem unidirektionalen Signalweg angeschlossen sind, wobei die erste und mindestens eine der zweiten und dritten Dioden von gleichartigem Aufbau sind.

## Revendications

1. Circuit d'alimentation de ligne à impédance active pour fournir un courant d'excitation continu pour une ligne de communication bifilaire à partir d'amplificateurs (20, 40) du conducteur relié à l'extrémité d'une fiche bipolaire et du conducteur relié au manchon de fiche de jack, via des bornes (2, 3) du conducteur relié à l'extrémité d'une fiche bipolaire et du conducteur relié au manchon de fiche de Jack en réponse à un signal de commande provenant d'un circuit de commande (60) ayant une entrée différentielle montée entre des prises (6, 7) du conducteur relié à l'extrémité bipolaire et du conducteur relié au manchon de fiche de jack pour fournir des signaux correspondant à des courants dans des résistances (12, 13) d'alimentation du conducteur relié à l'extrémité d'une fiche bipolaire et du conducteur relié au manchon de fiche de jack, le circuit d'alimentation de ligne à impédance active étant caractérisé par:

un amplificateur à courant continu (210) ayant une sortie et ayant une entrée connectées résistivement aux bornes du conducteur relié à l'extrémité d'une fiche bipolaire et au conducteur relié au manchon de fiche de jack; et

un trajet unidirectionnel (214) de signaux étant connecté entre une entrée de l'amplificateur du conducteur relié au manchon de fiche de jack et la sortie de l'amplificateur à courant continu;

d'où il résulte qu'en cas de défaut de la masse ou analogue se produisant sur un fil de la ligne de communication, la circulation du courant via l'amplificateur du conducteur relié au manchon de fiche de jack est empêchée.

2. Circuit d'alimentation de ligne à impédance active selon la revendication 1, dans lequel l'entrée de l'amplificateur du conducteur relié au manchon de fiche de jack est une entrée d'inversion et est accouplée résistivement au trajet unidirectionnel de signaux et est accouplée résistivement à une sortie de l'amplificateur du conducteur relié à l'extrémité d'une fiche bipolaire.

3. Circuit d'alimentation de ligne à impédance active selon la revendication 2, dans lequel le trajet unidirectionnel de signaux comprend une diode (216) disposée dans une configuration d'aide au courant dans la direction de la sortie de l'amplificateur à courant continu.

4. Circuit d'alimentation de ligne à impédance active selon la revendication 1, dans lequel le trajet unidirectionnel de signaux est caractérisé par un dispositif (216) de production de courant unidirectionnel monté en série avec une entrée de l'amplificateur du conducteur relié au manchon de fiche de jack, et une résistance (215) connectée en série entre la sortie de l'amplificateur à courant continu et le dispositif de conduction de courant unidirectionnel.

5. Circuit d'alimentation de ligne à impédance active selon la revendication 4, dans lequel le trajet unidirectionnel de signaux comprend un dispositif (217) de mise à la masse à courant alternatif à une jonction du dispositif conducteur unidirectionnel et de la résistance.

6. Circuit d'alimentation de ligne à impédance active comprenant: des amplificateurs (20, 40) de conducteur relié à l'extrémité d'une fiche bipolaire et de conducteur relié au manchon de fiche de jack répondant à un signal de commande proportionnel aux courants dans des résistances (12, 13) d'alimentation du conducteur relié à l'extrémité d'une fiche bipolaire et du conducteur relié au manchon de fiche de jack pour fournir un courant continu d'excitation et des signaux d'information à courant alternatif à une ligne de communication bifilaire via des bornes (2, 3) du conducteur relié à l'extrémité d'une fiche bipolaire et du conducteur relié au manchon de fiche de jack, connectées aux sorties de l'amplificateur du conducteur relié à l'extrémité d'une fiche bipolaire et du conducteur relié au manchon de fiche de jack par les résistances d'alimentation du conducteur relié à l'extrémité d'une fiche bipolaire et du conducteur relié au manchon de fiche de jack, respectivement, un circuit de commande (60) pour produire le signal de commande et ayant une entrée différentielle connectée entre les prises de tension du conducteur relié à l'extrémité d'une fiche bipolaire et du conducteur relié au manchon de fiche de jack, le circuit d'alimentation de ligne à impédance active étant caractérisé par des diviseurs de tension (14, 15) du conducteur relié à l'extrémité d'une fiche bipolaire et du conducteur relié à une fiche de jack, définissant des prises de tension (6, 7) du conducteur relié à l'extrémité d'une fiche bipolaire et du conducteur relié à une fiche de jack, respectivement, un amplificateur à courant continu (210) ayant une entrée d'inversion connectée résistivement aux bornes du conducteur relié à l'extrémité d'une fiche bipolaire et du conducteur relié au manchon de fiche de jack et une sortie connectée résistivement aux prises de tension du conducteur relié à l'extrémité d'une fiche bipolaire et du conducteur relié au manchon d'une fiche de jack, d'où il résulte qu'en fonctionnement des signaux aux prises de tension du conducteur relié à l'extrémité d'une fiche bipolaire et du conducteur relié au manchon de fiche de jack qui sont dus à la circulation du courant en mode commun dans les résistances d'alimentation du conducteur relié à l'extrémité d'une fiche bipolaire et du conducteur relié au manchon de fiche de jack sont réduits par un signal inverse provenant de la sortie de l'amplificateur à courant continu.

7. Circuit d'alimentation de ligne à impédance active selon la revendication 6, comprenant en outre un trajet unidirectionnel de signaux (214) connecté entre une entrée de l'amplificateur du conducteur relié au manchon de fiche de jack et la sortie de l'amplificateur à courant continu, d'où il résulte qu'en cas de défaut à la masse ou analogue se produisant sur un fil de la ligne de communication, la circulation du courant via l'amplificateur du conducteur relié au manchon de fiche de jack est empêchée.

8. Circuit d'alimentation de ligne à impédance active selon la revendication 7, dans lequel le trajet unidirectionnel de signaux comporte un dispositif (216) unidirectionnel de conduction du courant monté en série avec l'entrée de l'amplificateur du conducteur relié au manchon de fiche de jack et une résistance (215) étant montée en série entre la sortie de l'amplificateur à courant continu et le dispositif unidirectionnel de conduction de courant.

9. Circuit d'alimentation de ligne à impédance active selon la revendication 8, dans lequel le trajet unidirectionnel des signaux comporte en outre un condensateur (217) monté entre la masse et une jonction du dispositif unidirectionnel de conduction du courant et la résistance, le condensateur servant à fournir un trajet à impédance jusqu'à la masse pour des signaux à courant alternatif, le condensateur ayant une valeur telle que la conductance du trajet à impédance est supérieure à celle de la résistance pour des signaux ayant une fréquence correspondant à celle d'une distribution typique de l'alimentation à courant alternatif.

10. Circuit d'alimentation de ligne à impédance active selon la revendication 6, dans lequel des première et seconde résistances (218, 219) sont montées entre la sortie de l'amplificateur à courant continu et les prises de tension du conducteur relié à l'extrémité d'une fiche bipolaire et du conducteur relié au manchon de fiche de jack, respectivement, et une troisième résistance (211) est connectée entre la sortie et l'entrée d'inversion de l'amplificateur à courant continu, le circuit d'alimentation de ligne à impédance active comportant en outre:

un moyen conducteur bidirectionnel (220, 221) pour la conduction du courant en réponse à au moins une tension prédéterminée et sinon étant sensiblement non conducteur, le moyen conducteur bidirectionnel étant monté en série entre la sortie de l'amplificateur à courant continu et la jonction des première, seconde et troisième résistances, et

un trajet unidirectionnel (214) de signaux connecté entre une entrée de l'amplificateur du conducteur relié au manchon de fiche de jack et la jonction du moyen conducteur bidirectionnel et la sortie de l'amplificateur à courant continu;

d'où il résulte qu'en cas de défaut à la masse ou analogue se produisant dans un fil de la ligne de communication, la circulation du courant via l'amplificateur du conducteur relié au manchon de fiche de jack est empêchée.

11. Circuit d'alimentation de ligne à impédance active selon la revendication 7, dans lequel chacun des amplificateurs du conducteur relié à l'extrémité d'une fiche bipolaire, du conducteur relié au manchon de fiche de jack et à courant continu comporte des entrées d'inversion et de non-inversion, la sortie de l'amplificateur du conducteur relié à l'extrémité d'une fiche bipolaire étant résistivement reliée à l'entrée d'inversion de l'amplificateur du conducteur relié au manchon de fiche de jack, les entrées de non-inversion de l'amplificateur du conducteur relié à l'extrémité d'une fiche bipolaire et de l'amplificateur à courant continu étant connectées chacune en commun à une source de tension (VREF) de potentiel prédéterminé, la sortie de l'amplificateur à courant continu étant reliée par des résistances respectives (211, 218, 219) à l'entrée d'inversion de l'amplificateur à courant continu et aux prises de tension du conducteur relié à l'extrémité d'une fiche bipolaire et du conducteur relié au manchon de fiche de jack, et dans lequel le trajet unidirectionnel de signaux comprend une première diode (216) montée en série avec lui, et le circuit d'alimentation de ligne à impédance active comporte en outre:

des seconde et troisième diodes (220, 221) connectées dans une configuration parallèle dos à dos entre la jonction des résistances respectives et la jonction de la sortie de l'amplificateur à courant continu et du trajet unidirectionnel de signaux.

12. Circuit d'alimentation de ligne à impédance active selon la revendication 8, dans lequel chaque amplificateur du conducteur relié à l'extrémité d'une ligne bipolaire, du conducteur relié au manchon de fiche de jack et à courant continu comporte des entrées d'inversion et de non-inversion, la sortie de l'amplificateur du conducteur relié à l'extrémité d'une fiche bipolaire étant connectée résistivement à l'entrée d'inversion de l'amplificateur du conducteur relié au manchon de fiche de jack, les entrées de non-inversion de l'amplificateur du conducteur relié à l'extrémité d'une fiche bipolaire et de l'amplificateur à courant continu étant connectées chacune en commun à une source de tension (VREF) de potentiel prédéterminé, la sortie de l'amplificateur à courant continu étant connectée par des résistances respectives (211, 218, 219) à l'entrée d'inversion de l'amplificateur à courant continu et aux prises de tension du conducteur relié à l'extrémité d'une fiche bipolaire et du conducteur relié au manchon de fiche de jack, et dans lequel le trajet unidirectionnel de signaux comporte une première diode (216) montée en série avec lui, et le circuit d'alimentation de ligne à impédance active comporte en outre:

des seconde et troisième diodes (220, 221) connectées dans une configuration parallèle dos à dos entre la jonction des résistances respectives et la jonction de la sortie de l'amplificateur à courant continu et du trajet unidirectionnel de signaux.

13. Circuit d'alimentation de ligne à impédance active selon la revendication 9, dans lequel chacun des amplificateurs du conducteur relié à l'extrémité d'une fiche bipolaire, du conducteur relié au manchon de fiche de jack et à courant continu comporte des entrées d'inversion et de non-inversion, la sortie de l'amplificateur du conducteur relié à l'extrémité d'une fiche bipolaire étant reliée résistivement à l'entrée d'inversion de l'amplificateur du conducteur relié au manchon de fiche de jack, les entrées de non-inversion de l'amplificateur du conducteur relié à l'extrémité d'une fiche bipolaire et de l'amplificateur à courant continu étant reliées chacune en commun à une source de tension (VREF) de potentiel prédéterminé, la sortie de l'amplificateur à courant continu étant connectée par des résistances respectives (211, 218, 219) à l'entrée d'inversion de l'amplificateur à courant continu et aux prises de tension du conducteur relié à l'extrémité d'une fiche bipolaire et du conducteur relié au manchon de fiche de jack, et dans lequel le trajet unidirectionnel de signaux comporte une première diode (216) montée en série avec lui, et le circuit d'alimentation de ligne à impédance active comporte en outre:

des seconde et troisième diodes (220, 221) connectées dans une configuration parallèle dos à dos entre la jonction des résistances respectives et la jonction de la sortie de l'amplificateur à courant continu et du trajet unidirectionnel de signaux.

14. Circuit d'alimentation de ligne à impédance active selon la revendication 7, dans lequel chacun des amplificateurs du conducteur relié à l'extrémité d'une fiche bipolaire, du conducteur relié au manchon de fiche de jack et à courant continu comporte des entrées d'inversion et de non-inversion, la sortie de l'amplificateur du conducteur relié à l'extrémité d'une fiche bipolaire étant connectée résistivement à l'entrée d'inversion de l'amplificateur du conducteur relié au manchon de fiche de jack, les entrées de non inversion de l'amplificateur du conducteur relié à l'extrémité d'une fiche bipolaire et de l'amplificateur à courant continu étant connectées chacune en commun à une source de tension (VREF) de potentiel prédéterminé, la sortie de l'amplificateur à courant continu étant reliée par des résistances respectives (211, 218, 219) à l'entrée d'inversion de l'amplificateur à courant continu et aux prises de tension du conducteur relié à l'extrémité d'une fiche bipolaire et du conducteur relié au manchon de fiche de jack, et dans lequel le trajet unidirectionnel de signaux comprend une première diode (216) connectée en série avec lui, le circuit d'alimentation de ligne à impédance active comportant en outre:

des seconde et troisième diodes (220, 221) connectées dans une configuration parallèle dos à dos entre la jonction des résistances respectives et la jonction de la sortie de l'amplificateur à courant continu et du trajet unidirectionnel de signaux, la première, et au moins la seconde ou la troisième diode ayant une structure similaire.

15. Circuit d'alimentation de ligne à impédance active selon la revendication 8, dans lequel chaque amplificateur du conducteur relié à l'extrémité d'une fiche bipolaire, du conducteur relié au manchon de fiche de jack et à courant continu comporte des entrées d'inversion et de non-inversion, la sortie de l'amplificateur relié à l'extrémité d'une fiche bipolaire étant connectée résistivement à l'entrée d'inversion de l'amplificateur relié au manchon de fiche de jack, les entrées de non-inversion de l'amplificateur du conducteur relié à l'extrémité d'une fiche bipolaire et de l'amplificateur à courant continu étant connectées chacune en commun à une source de tension (VREF) de potentiel prédéterminé, la sortie de l'amplificateur à courant continu étant connectée par des résistances respectives (211, 218, 219) à l'entrée d'inversion d'un amplificateur à courant continu et aux prises de tension du conducteur relié à l'extrémité d'une fiche bipolaire et du conducteur relié au manchon de fiche de jack, et dans lequel le trajet unidirectionnel de signaux comporte une première diode (216) connectée en série avec lui, le circuit d'alimentation de ligne à impédance active comportant en outre:

des seconde et troisième diodes (220, 221) montées dans une configuration parallèle dos à dos entre la jonction des résistances respectives et la jonction de la sortie de l'amplificateur à courant continu et du trajet unidirectionnel de signaux, la première et au moins la seconde ou la troisième diode ayant une structure similaire.

16. Trajet d'alimentation de ligne à impédance active selon la revendication 9, dans lequel chaque amplificateur du conducteur relié à l'extrémité d'une fiche bipolaire, du conducteur relié au manchon de fiche de jack et à courant continu comporte des entrées d'inversion et de non-inversion, la sortie de l'amplificateur du conducteur relié à l'extrémité d'une fiche bipolaire étant reliée résistivement à l'entrée d'inversion de l'amplificateur du conducteur relié au manchon de fiche de jack, les entrées de non-inversion de l'amplificateur du conducteur relié à l'extrémité d'une fiche bipolaire et de l'amplificateur à courant continu étant chacun connectées en commun à une source de tension (VREF) de potentiel prédéterminé, la sortie de l'amplificateur à courant continu étant connectée par des résistances respectives (211, 218, 219) à l'entrée d'inversion de l'amplificateur à courant continu et aux prises de tension du conducteur relié à l'extrémité d'une fiche bipolaire et du conducteur relié au manchon de fiche de jack, et dans lequel le trajet unidirectionnel de signaux comporte une première diode (216) montée en série avec lui, le circuit d'alimentation de la ligne à impédance active comportant en outre:

des seconde et troisième diodes (220, 221) montées dans une configuration parallèle dos à dos entre la jonction des résistances respectives et la jonction de la sortie de l'amplificateur à courant continu et du trajet unidirectionnel de signaux, et au moins l'une des seconde et troisième diodes ayant une structure similaire.

FIG. 1

CONTOURS OF CONSTANT HEAT DISSIPATION

**FIG. 2**

**FIG. 3**